# FASCICULE DE BREVET EUROPEEN

(11) **EP 4 153 342 B1**
(45) Date de publication et mention de la délivrance du brevet: **05.06.2024**
(21) Numéro de dépôt: 21722968.1
(22) Date de dépôt: 07.04.2021
(51) Int. Cl.: B01D 33/067, B01D 33/073

(54) **PANNEAU FILTRANT ET FILTRE A TAMBOUR EQUIPE DE TELS PANNEAUX**
FILTERPANEEL UND TROMMELFILTER MIT SOLCHEN PANEELEN
FILTERING PANEL AND DRUM FILTER PROVIDED WITH SUCH PANELS

(30) Priorité: 20.05.2020 FR 2005268
(43) Date de publication de la demande: 29.03.2023
(73) Titulaire: Etablissements Faivre, 25110 Baume les Dames (FR)
(72) Inventeur: FAIVRE, Aubert, 25000 BESANCON (FR); FAIVRE, Frédéric, 25110 BAUME LES DAMES (FR); FAIVRE, Jean-Louis, 25770 SERRE LES SAPINS (FR)
(74) Mandataire: Novagraaf Technologies
(86) Numéro de dépôt international: PCT/FR2021/050608
(87) Numéro de publication internationale: WO 2021/234235

(56) Documents cités:
- CN-U- 204 017 500
- DE-U1-202010 008 227
- FR-A1- 3 039 775
- GB-A- 1 513 373
- US-B1- 6 484 885

## Description

### Domaine technique de l'invention

La présente invention concerne un panneau filtrant du type prévu pour être monté dans un filtre à tambour et un filtre à tambour associé.

L'invention concerne plus particulièrement un panneau filtrant comportant un cadre périphérique et une toile filtrante fixée sur le cadre.

### Arrière-plan technique

Il est connu de réaliser des filtres à tambour par exemple pour le traitement des eaux en amont d'une installation industrielle, en particulier avec d'importants débits de liquide. Ce type de filtre à tambour comporte un tambour filtrant qui est monté rotatif dans une cuve et partiellement immergé dans le flux de liquide à filtrer.

Le tambour comporte, circulairement répartis à sa périphérie, en une ou plusieurs rangées, une pluralité de panneaux filtrants. Chaque panneau filtrant comporte un cadre recouvert d'une toile filtrante. Chaque panneau filtrant est recourbé puis fixé sur le tambour de manière à suivre la courbure du tambour autour de son axe de rotation.

Le liquide entrant dans la cuve pénètre à l'intérieur du tambour puis traverse les panneaux filtrants radialement par gravité de l'intérieur vers l'extérieur, puis s'écoule vers la sortie de la cuve. Ainsi les débris et autres impuretés se déposent sur l'intérieur des panneaux filtrants, sur la toile filtrante.

Pour pouvoir nettoyer la surface filtrante tout en poursuivant la filtration, le filtre est monté rotatif autour de l'axe du tambour. Pour procéder au nettoyage d'une partie de la surface filtrante, on fait tourner le tambour autour de son axe pour sortir du liquide la partie de la surface filtrante à nettoyer. La surface filtrante peut être ensuite nettoyée par projection de liquide aux moyens d'une rampe d'aspersion agencée à la périphérie du tambour.

Les panneaux filtrants sont généralement constitués d'une toile tendue sur un cadre. L'une des difficultés pour la réalisation des panneaux filtrants est qu'ils doivent résister au poids des boues qui s'accumulent dans le tambour et aux cycles successifs de filtration puis de nettoyage.

Les toiles métalliques présentent l'avantage d'être très résistantes mais pour un coût relativement élevé. Alternativement il est connu de réaliser les toiles filtrantes en matériau plastique, par exemple en polypropylène. Le coût de fabrication s'avère bien moins élevé que les toiles métalliques mais ce type de toile filtrante est beaucoup plus fragile. On constate à l'usage une détérioration très rapide, notamment du fait qu'il est difficile d'assurer une tension appropriée de la toile sur le cadre formant le panneau filtrant.

On connaît aussi des panneaux tels que divulgués par le document US6484885B1.

La présente invention vise notamment à résoudre les problèmes mentionnés précédemment en proposant un panneau filtrant qui soit à la fois plus résistant et économique à fabriquer, et qui garantissent une filtration optimale.

### Résumé de l'invention

L'invention propose un panneau filtrant prévu pour être monté dans un filtre à tambour, le panneau filtrant comportant un cadre périphérique sur lequel est fixé une toile filtrante, le cadre étant formé de deux longerons qui sont reliés à chaque extrémité par une traverse d'extrémité, caractérisé en ce que le panneau filtrant comporte un réseau de croisillons qui relie les bords intérieurs du cadre entre eux, le réseau de croisillons formant au moins un premier motif fermé au centre du cadre et comportant au moins quatre diagonales qui sont inclinées par rapport aux longerons et qui s'étendent depuis le premier motif fermé jusqu'à un bord intérieur du cadre, et en ce que le réseau de croisillons comporte au moins deux traverses intermédiaires qui sont parallèles aux traverses d'extrémité et qui sont agencées respectivement de part et d'autre du premier motif fermé.

Grâce à l'invention, on obtient un compromis optimal entre rigidité et flexibilité du panneau filtrant pour permettre son montage dans un filtre à tambour. En particulier, on constate à l'usage que, après fixation de la toile filtrante sur le cadre, même si la toile filtrante n'est pas encore parfaitement tendue sur le cadre, on obtient une tension parfaite de la toile filtrante. La tension de la toile filtrante permet d'excellentes performances de filtration tout en assurant une plus grande longévité du panneau filtrant.

Selon d'autres caractéristiques de l'invention :
- au moins quatre diagonales s'étendent chacune depuis le premier motif fermé jusqu'à un angle du cadre ;
- au moins quatre diagonales s'étendent chacune depuis le premier motif fermé jusqu'à l'extrémité d'une traverse intermédiaire ;
- chaque traverse intermédiaire croise au moins deux diagonales ;
- le réseau de croisillons forme un second motif fermé concentrique au premier motif fermé ;
- le réseau de croisillons comporte des croisillons obliques qui croisent des diagonales et qui sont inclinés par rapport aux longerons ;
- le réseau de croisillons possède un plan de symétrie transversal coupant le premier motif fermé en son centre ;
- le réseau de croisillons comporte deux croisillons transversaux qui s'étendent chacun transversalement depuis un longeron au moins jusqu'au premier motif fermé ;
- le réseau de croisillons comporte deux croisillons longitudinaux qui s'étendent chacun longitudinalement depuis une traverse d'extrémité jusqu'à une traverse intermédiaire ;
- le premier motif fermé est un polygone à au moins quatre côtés, de préférence à six côtés ;
- au moins quatre diagonales sont connectées au premier motif fermé à un angle du polygone ;
- la section des croisillons formant le réseau de croisillons a un profil trapézoïdal dont le sommet est orienté du côté de la toile filtrante ;
- le réseau de croisillons comporte au moins deux traverses intermédiaires dont le profil trapézoïdal définit une aire supérieure d'au moins 20% à l'aire définie par le profil trapézoïdal des diagonales ;
- le premier motif fermé se répète au moins une fois de chaque côté du motif fermé situé au centre du cadre ;
- le cadre et le réseau de croisillons sont réalisés d'une seule pièce par moulage en matière plastique ;
- la toile filtrante est réalisée en matière plastique et soudée sur une face du cadre y compris sur la face correspondante du réseau de croisillons. L'invention propose aussi un filtre à tambour prévu pour la filtration d'un liquide, le filtre à tambour comportant un tambour monté à rotation dans une cuve, caractérisé en ce qu'il comporte des panneaux filtrants selon l'une des caractéristiques précédentes qui sont fixés sur le tambour.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective qui représente un filtre à tambour équipé de panneaux filtrants conformes aux enseignements de l'invention ;
[Fig.2] - la figure 2 est une vue schématique de côté qui représente le montage de deux panneaux filtrants sur le tambour équipant le filtre à tambour de la figure 1 ;
[Fig.3] - la figure 3 est une vue en perspective éclatée qui représente un panneau filtrant du filtre à tambour de la figure 1 avant montage sur le tambour et avec sa toile filtrante avant fixation de la toile filtrante sur un cadre du panneau filtrant ;
[Fig.4] - la figure 4 est une vue de côté qui représente le panneau filtrant de la figure 3 avec sa toile filtrante fixée sur la face supérieure ;
[Fig.5] - la figure 5 est une vue de dessus avec arrachement qui représente le panneau filtrant de la figure 3 et sa toile filtrante partiellement arrachée ;
[Fig.6] - la figure 6 est une vue selon le plan de coupe A-A qui représente la section d'un croisillon du panneau filtrant de la figure 3 ;
[Fig.7] - la figure 7 est une vue selon le plan de coupe B-B qui représente la section d'une traverse intermédiaire secondaire du panneau filtrant de la figure 3 ;
[Fig.8] - la figure 8 est une vue de dessus avec arrachement similaire à celle de la figure 5 qui représente un mode de réalisation alternatif du panneau filtrant comportant un réseau de croisillons avec plusieurs motifs fermés répétés.

### Description détaillée de l'invention

Dans la description qui va suivre, des éléments identiques, similaires ou analogues seront désignés par les mêmes chiffres de référence.

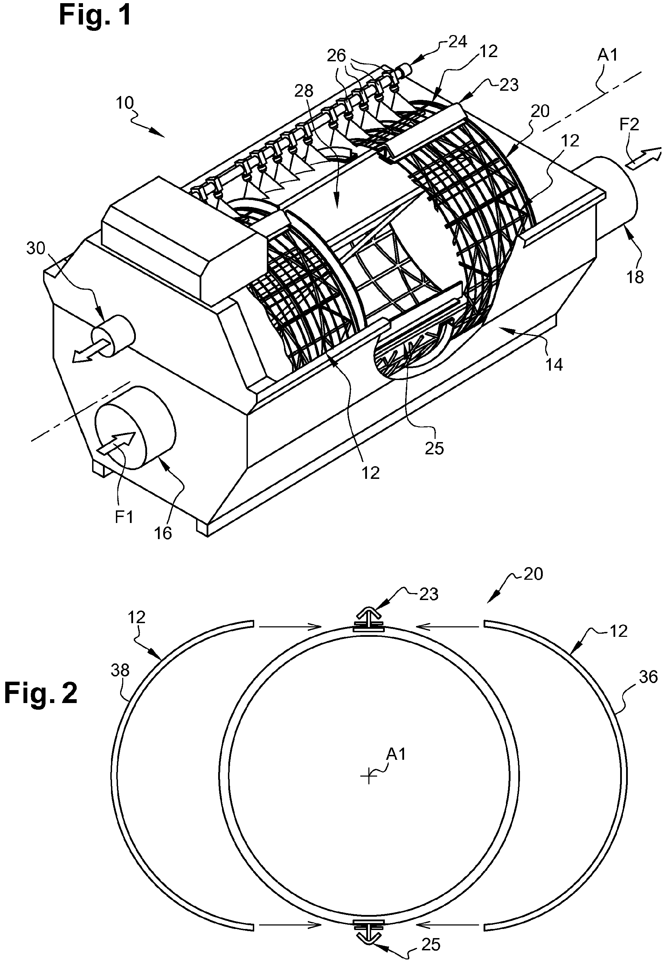

Sur la figure 1, on a représenté un filtre à tambour 10 équipé de panneaux filtrants 12 conformes aux enseignements de l'invention.

Le filtre à tambour 10 comporte une cuve 14 pourvue d'un orifice d'entrée 16 pour le liquide à filtrer et d'un orifice de sortie 18. Le sens de circulation du liquide à l'intérieur du filtre à tambour 10 est représenté par les flèches F1 et F2.

A l'intérieur de la cuve 14, un tambour 20 est monté à rotation autour d'un axe horizontal A1. Le tambour 20 possède une structure cylindrique sur laquelle sont montés les panneaux filtrants 12.

Selon le mode de réalisation représenté, le tambour 20 comporte six panneaux filtrants 12, plus particulièrement trois séries de deux panneaux filtrants 12. Selon la configuration représentée, et comme illustré par le schéma de la figure 2, deux panneaux filtrants 12 permettent de former une circonférence complète du tambour 20. Il y a donc pour chaque série deux panneaux filtrants 12 qui sont montés recourbés sur le tambour 20 puis qui sont fixés au tambour 20, par exemple au moyen d'une plaque de fixation 23, 25 de manière à former une portion de cylindre. Ainsi, dans ce mode de réalisation, chaque panneau filtrant 12 a globalement un profil en demi-cercle lorsqu'il est monté sur le tambour 20.

Selon des variantes de réalisation (non représentées), le tambour 20 peut comporter un nombre de séries de panneaux filtrants 12 supérieur ou inférieur, et il peut comporter un nombre de panneaux filtrants 12 par série supérieur. Par exemple, une circonférence du tambour peut être obtenue au moyen de quatre panneaux filtrants 12 lorsque l'on souhaite réaliser une tambour 20 de plus grand diamètre sans changer la dimension des panneaux filtrants 12.

Le filtre à tambour 10 comporte également une rampe d'aspersion 24 équipée d'une pluralité de buses d'aspersion 26. Cette rampe d'aspersion 24 s'étend ici parallèlement à l'axe de rotation A1, à l'extérieur du tambour 20, de manière à pouvoir décolmater les panneaux filtrants 12. De plus, une rigole 28 est agencée à l'intérieur du tambour 20, dans sa partie haute, de manière à récupérer les résidus issus du décolmatage des panneaux filtrants 12, et de manière à les évacuer vers l'extérieur du filtre à tambour 10 par un orifice d'évacuation 30.

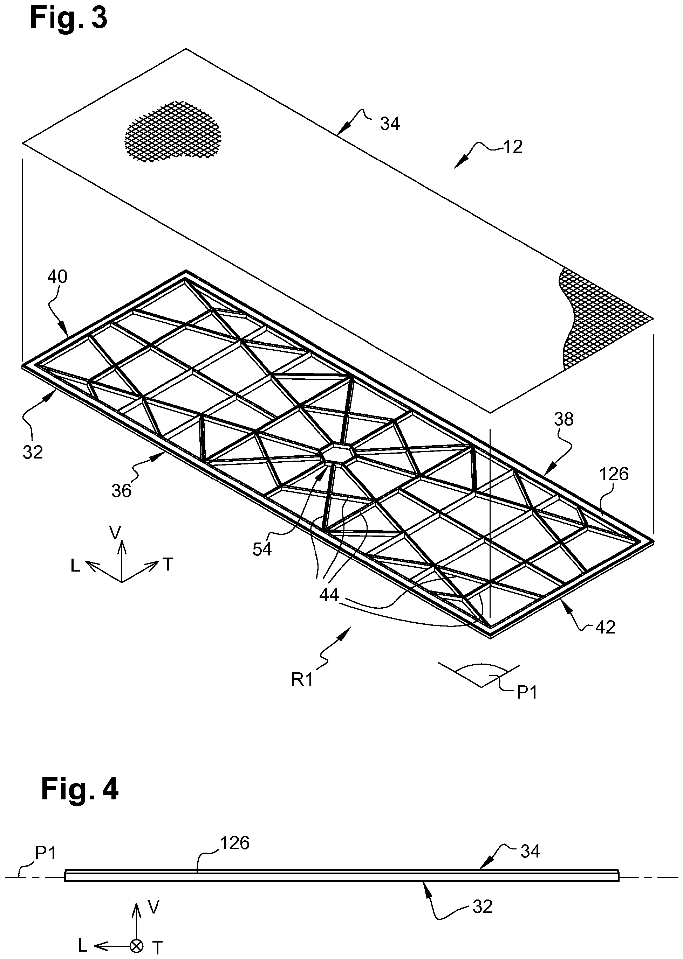

Avant d'être monté dans le filtre à tambour 10, chaque panneau filtrant 12 se présente sous la forme d'une plaque relativement plane, telle que représentée sur les figures 3 à 5. Le panneau filtrant 12 s'étend ici dans un plan horizontal P1.

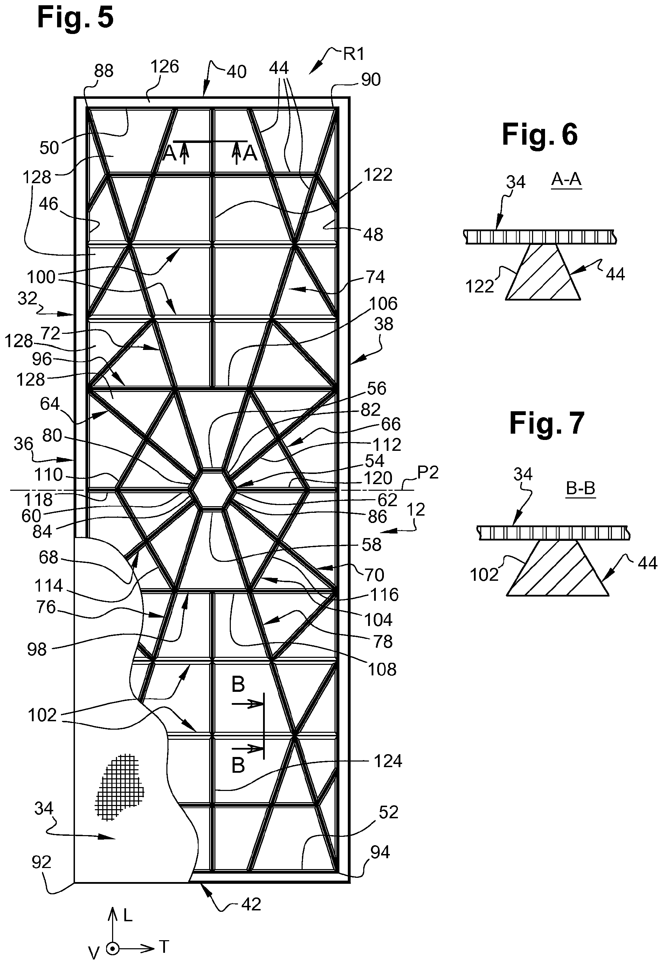

Pour la description de l'invention et la compréhension des revendications, on adoptera à titre non limitatif et sans référence limitative à la gravité terrestre les orientations verticale, longitudinale et transversale selon le repère V, L, T indiqué aux figures 3 à 7, dont les axes longitudinal L et transversal T s'étendent dans un plan horizontal, lorsque le panneau filtrant 12 est à l'état de plaque, c'est-à-dire avant montage sur le tambour 20. On utilisera à titre non limitatif une orientation longitudinale de l'arrière vers l'avant selon l'axe L, ce qui correspond à une orientation du bas vers le haut en considérant la figure 5, et une orientation transversale de la gauche vers la droite selon l'axe T, ce qui correspond à une orientation de la gauche vers la droite en considérant la figure 5.

Le panneau filtrant 12 comporte un cadre 32 périphérique sur lequel est fixée une toile filtrante 34. Le cadre 32 est formé de deux longerons 36, 38 qui sont reliés à chaque extrémité par une traverse d'extrémité 40, 42.

Un réseau R1 de croisillons 44 relie les bords intérieurs 46, 48, 50, 52, du cadre 32 entre eux. On entend ici par réseau R1 de croisillons 44 un maillage de croisillons ou barreaux, dans le plan P1 du panneau filtrant 12, qui contribuent à assurer une certaine rigidité au cadre 32 tout en permettant une flexion du panneau filtrant 12 autour d'un axe transversal, le long des longerons 36, 38, pour permettre le montage des panneaux filtrants 12 sur le tambour 20 dans une position où les longerons 36, 38 dessinent un arc de cercle comme illustré par la figure 2.

Avantageusement, le réseau R1 de croisillons 44 forme un premier motif fermé 54 au centre du cadre 32. On entend ici par motif fermé une forme dessinée par un ensemble de croisillons 44 contigus. Le premier motif fermé 54 est ici un hexagone et il est ici vide, c'est-à-dire qu'il n'est traversé par aucun croisillon 44.

Selon des variantes de réalisation (non représentées), le premier motif fermé pourrait être constitué par un autre type de polygone, par exemple un carré, un octogone. Le premier motif fermé pourrait aussi être constitué par un cercle ou une forme ovale.

Selon le mode de réalisation représenté, l'hexagone comporte deux premiers côtés 56, 58 opposés qui sont parallèles aux traverses d'extrémités 40, 42, donc transversaux. Comme le premier motif fermé 54 est centré dans le cadre 32, l'hexagone comporte deux premiers sommets 60, 62 opposés qui sont positionnés à mi-distance entre les deux traverses d'extrémité 40, 42. Avantageusement, le réseau R1 de croisillons 44 comporte au moins quatre diagonales, ici huit diagonales 64, 66, 68, 70, 72, 74, 76, 78 qui sont inclinées par rapport aux longerons 36, 38 et qui s'étendent depuis le premier motif fermé 54 jusqu'à un bord intérieur 46, 48 du cadre 32.

Selon le mode de réalisation représenté, quatre diagonales primaires 64, 66, 68, 70 s'étendent chacune depuis le milieu d'un côté 80, 82, 84, 86 de l'hexagone qui est incliné par rapport aux traverses d'extrémité 40, 42, jusqu'au bord intérieur 46, 48 du longeron 36, 38 en vis-à-vis. Quatre diagonales secondaires 72, 74, 76, 78 s'étendent chacune depuis l'extrémité d'un des premiers côtés 56, 58 de l'hexagone jusqu'à un angle 88, 90, 92, 94 du cadre 32.

Avantageusement, le réseau R1 de croisillons 44 comporte des traverses intermédiaires 96, 98, 100, 102 qui sont parallèles aux traverses d'extrémité 40, 42, et qui sont agencées respectivement de part et d'autre du premier motif fermé 54. Ici deux traverses intermédiaires primaires 96, 98, de part et d'autre du premier motif fermé 54, relient chacune les deux longerons 36, 38 au niveau de l'extrémité d'une des diagonales primaires 64, 66, 68, 70.

Ici quatre traverses intermédiaires secondaires 100, 102, agencées de part et d'autre du premier motif fermé 54, relient chacune les deux longerons 36, 38.

Selon le mode de réalisation représenté, les traverses intermédiaires secondaires 100, 102 croisent les diagonales secondaires 72, 74, 76, 78. Avantageusement, le réseau R1 de croisillons 44 forme un second motif fermé 104 concentrique au premier motif fermé 54. Le second motif fermé 104 est ici un hexagone dont les côtés parallèles aux traverses d'extrémité 40, 42 sont constitués par des portions centrales 106, 108 des traverses intermédiaires primaires 96, 98, et dont les autres côtés sont formés par des croisillons obliques 110, 112, 114, 116 qui croisent les diagonales primaires 64, 66, 68, 70 et qui sont inclinés par rapport aux longerons 36, 38. Avantageusement, le réseau R1 de croisillons 44 comporte deux croisillons transversaux 118, 120 qui s'étendent chacun transversalement depuis le premier motif fermé 54, ici depuis les deux premiers sommets 60, 62 de l'hexagone, jusqu'au longeron 36, 38 en vis-à-vis.

Selon une variante de réalisation, les deux croisillons transversaux 118, 120 peuvent se prolonger jusqu'au centre du premier motif fermé 54 et former ainsi une traverse continue d'un bord à l'autre du cadre 32. Avantageusement, le réseau R1 de croisillons 44 comporte deux croisillons longitudinaux 122, 124 qui s'étendent chacun longitudinalement depuis une traverse d'extrémité 40, 42, ici depuis le milieu de chaque traverse d'extrémité 40, 42, jusqu'à une traverse intermédiaire 96, 98, 100, 102, ici jusqu'à chaque traverse intermédiaire primaire 96, 98.

Selon le mode de réalisation représenté, le réseau R1 de croisillons 44 possède un plan de symétrie transversal P2 coupant le premier motif fermé 54 en son centre et passant par les croisillons transversaux 118, 120.

Comme illustré par les figures 6 et 7, les croisillons 44 ont de préférence une section globalement triangulaire ou trapézoïdale, dont le sommet est orienté du côté de la toile filtrante 34. Sur la figure 6 on a représenté la section de la majorité des croisillons 44, incluant notamment les diagonales 64, 66, 68, 70, 72, 74, 76, 78, les traverses intermédiaires primaires 96, 98, les croisillons obliques 110, 112, 114, 116.

Sur la figure 7, on a représenté la section d'une traverse intermédiaire secondaire 100, 102. Cette section est ici de taille plus importante que la section des autres croisillons 44 du fait de la fonction de rigidification des traverses intermédiaires secondaires 100, 102. Par exemple le profil trapézoïdal définit ici une aire supérieure de 20% à 40% par rapport à l'aire définie par le profil trapézoïdal des autres croisillons 44.

Avantageusement, le cadre 32 et le réseau R1 de croisillons 44 sont réalisés d'une seule pièce par injection de matière plastique dans un moule, par exemple en polyéthylène (PEHD), ou en polypropylène (PP), ou en polyamide (PA) tel que du nylon. Le cadre 32 peut être réalisé dans la même matière plastique que la toile filtrante 34.

Avantageusement, la toile filtrante 34 est soudée sur la face supérieure 126 du cadre 32, y compris sur la face supérieure du réseau R1 de croisillons 44. Ainsi, comme illustré par les figures 6 et 7, le sommet de chaque croisillon 44 est soudé à la toile filtrante 34. Différentes méthodes de soudure peuvent être mises en oeuvre, le but étant d'obtenir une liaison robuste entre la toile filtrante 34 et le cadre 32 et les croisillons 44 en garantissant une tension parfaite dans la toile filtrante 34 lorsque les panneaux filtrants 12 sont recourbés comme sur les figures 1 et 2.

On note que le panneau filtrant 12 est prévu pour être monté dans le filtre à tambour 10 de manière que la toile filtrante 34 soit du côté extérieur du cylindre.

Grâce à la structure du réseau R1 de croisillons décrit précédemment, on obtient une bonne rigidité du panneau filtrant 12 tout en permettant une bonne flexibilité dans le sens longitudinal, c'est-à-dire en bandant les longerons 36, 38.

La structure du premier motif fermé 54 associé aux diagonales 64, 66, 68, 70, 72, 74, 76, 78 permet au panneau filtrant 12 de supporter les contraintes en flexion qui s'appliquent plus particulièrement le long du plan de symétrie transversal P2. On remarque que la partie centrale du réseau R1 de croisillons 44 forme comme une toile d'araignée qui permet au panneau filtrant 12 de supporter des efforts très élevés, y compris lorsque le panneau filtrant 12 est monté dans le filtre à tambour 10 et qu'il supporte des charges élevées, notamment une masse importante de liquide à filtrer et les boues recueillies sur les parois de la toile filtrante 34.

Un autre avantage du panneau filtrant 12 est qu'il n'a pas besoin d'un maillage en croisillons 44 trop serrés pour être résistant aux efforts. Ceci permet de former des fenêtres 128 de taille suffisamment grande pour maximiser la surface de toile filtrante 34 en contact avec le liquide à filtrer, tout en minimisant la quantité d'eau remontée avec les parois des croisillons 44 lorsque le tambour 20 est entraîné en rotation en vue de nettoyer le panneau filtrant 12 avec les buses d'aspersion 26.

Sans remonter trop d'eau avec les parois des croisillons 44, il est possible grâce en particulier aux traverses intermédiaires secondaires 100, 102, de remonter de manière optimale les débris et autres matières solides contenus dans le liquide à filtrer, et permettre leur évacuation par la rigole 28. Ainsi, le choix d'une section de taille supérieure pour les traverses intermédiaires secondaires 100, 102, par rapport aux autres croisillons 44, permet de minimiser la quantité d'eau remontée par la majorité des croisillons 44, tout en ayant pour les traverses intermédiaires secondaires 100, 102 suffisamment de surface pour remonter les débris et matières solides.

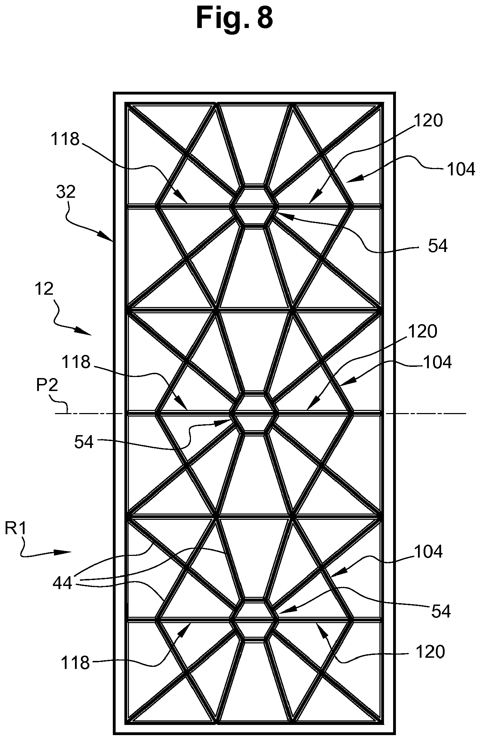

Selon un mode de réalisation alternatif représenté à la figure 8, le panneau filtrant 12 se distingue de celui des figures 3 à 7 par le fait que le réseau R1 de croisillons 44 comporte trois fois le motif central, c'est-à-dire que le premier motif fermé 54 et le second motif fermé 104 se répètent une fois de chaque côté du groupe de motifs fermés 54, 104 situé au centre du cadre 32. Selon le mode de réalisation représenté sur la figure 8, on note que les croisillons transversaux 118, 120 se prolongent jusqu'au centre de chaque premier motif fermé 54 ce qui forme ici trois traverses sur le cadre 32. Bien entendu, le mode de réalisation de la figure 8 pourrait aussi comporter des croisillons transversaux 118, 120 comme sur le mode de réalisation précédent, où les croisillons transversaux 118, 120 s'arrêtent aux sommets de chaque premier motif fermé 54.

## Revendications

1. Panneau filtrant (12) prévu pour être monté dans un filtre à tambour (10), le panneau filtrant (12) comportant un cadre (32) périphérique sur lequel est fixé une toile filtrante (34), le cadre (32) étant formé de deux longerons (36, 38) qui sont reliés à chaque extrémité par une traverse d'extrémité (40, 42), **caractérisé en ce que** le panneau filtrant (12) comporte un réseau (R1) de croisillons (44) qui relie les bords intérieurs (46, 48, 50, 52) du cadre (32) entre eux, le réseau (R1) de croisillons (44) formant au moins un premier motif fermé (54) au centre du cadre (32) et comportant au moins quatre diagonales (64, 66, 68, 70, 72, 74, 76, 78) qui sont inclinées par rapport aux longerons (36, 38) et qui s'étendent depuis le premier motif fermé (54) jusqu'à un bord intérieur (46, 48, 50, 52) du cadre (32), et **en ce que** le réseau (R1) de croisillons (44) comporte au moins deux traverses intermédiaires (96, 98, 100, 102) qui sont parallèles aux traverses d'extrémité (40, 42) et qui sont agencées respectivement de part et d'autre du premier motif fermé (54).

2. Panneau filtrant (12) selon la revendication 1, **caractérisé en ce qu'**au moins quatre diagonales (72, 74, 76, 78) s'étendent chacune depuis le premier motif fermé (54) jusqu'à un angle (88, 90, 92, 94) du cadre (32).

3. Panneau filtrant (12) selon la revendication 1 ou 2, **caractérisé en ce qu'**au moins quatre diagonales (64, 66, 68, 70) s'étendent chacune depuis le premier motif fermé (54) jusqu'à l'extrémité d'une traverse intermédiaire (96, 98).

4. Panneau filtrant (12) selon l'une quelconque des revendications 1 à 3, **caractérisé en ce que** chaque traverse intermédiaire (96, 98, 100, 102) croise au moins deux diagonales (72, 74, 76, 78).

5. Panneau filtrant (12) selon l'une quelconque des revendications 1 à 4, **caractérisé en ce que** le réseau (R1) de croisillons (44) forme un second motif fermé (104) concentrique au premier motif fermé (54).

6. Panneau filtrant (12) selon l'une quelconque des revendications 1 à 5, **caractérisé en ce que** le réseau (R1) de croisillons (44) comporte des croisillons obliques (110, 112, 114, 116) qui croisent des diagonales (64, 66, 68, 70) et qui sont inclinés par rapport aux longerons (36, 38).

7. Panneau filtrant (12) selon l'une quelconque des revendications 1 à 6, **caractérisé en ce que** le réseau (R1) de croisillons (44) possède un plan de symétrie transversal (P2) coupant le premier motif fermé (54) en son centre.

8. Panneau filtrant (12) selon l'une quelconque des revendications 1 à 7, **caractérisé en ce que** le réseau (R1) de croisillons (44) comporte deux croisillons transversaux (118, 120) qui s'étendent chacun transversalement depuis un longeron (36, 38) au moins jusqu'au premier motif fermé (54).

9. Panneau filtrant (12) selon l'une quelconque des revendications 1 à 8, **caractérisé en ce que** le réseau (R1) de croisillons (44) comporte deux croisillons longitudinaux (122, 124) qui s'étendent chacun longitudinalement depuis une traverse d'extrémité (40, 42) jusqu'à une traverse intermédiaire (106, 108).

10. Panneau filtrant (12) selon l'une quelconque des revendications 1 à 9, **caractérisé en ce que** le premier motif fermé (54) est un polygone à au moins quatre côtés, de préférence à six côtés.

11. Panneau filtrant (12) selon la revendication 10, **caractérisé en ce qu'**au moins quatre diagonales (72, 74, 76, 78) sont connectées au premier motif fermé (54) à un angle du polygone.

12. Panneau filtrant (12) selon l'une quelconque des revendications 1 à 11, **caractérisé en ce que** la section des croisillons (44) formant le réseau (R1) de croisillons (44) a un profil trapézoïdal dont le sommet est orienté du côté de la toile filtrante (34).

13. Panneau filtrant (12) selon la revendication 12, **caractérisé en ce que** le réseau (R1) de croisillons (44) comporte au moins deux traverses intermédiaires (100, 102) dont le profil trapézoïdal définit une aire supérieure d'au moins 20% à l'aire définie par le profil trapézoïdal des diagonales (72, 74, 76, 78).

14. Panneau filtrant (12) selon l'une quelconque des revendications 1 à 13, **caractérisé en ce que** le premier motif fermé (54) se répète au moins une fois de chaque côté du motif fermé (54) situé au centre du cadre (32).

15. Panneau filtrant (12) selon l'une quelconque des revendications 1 à 14, **caractérisé en ce que** le cadre (32) et le réseau (R1) de croisillons (44) sont réalisés d'une seule pièce par moulage en matière plastique.

16. Panneau filtrant (12) selon la revendication 15, **caractérisé en ce que** la toile filtrante (34) est réalisée en matière plastique et soudée sur une face (126) du cadre (32) y compris sur la face correspondante du réseau (R1) de croisillons (44).

17. Filtre à tambour (10) prévu pour la filtration d'un liquide, le filtre à tambour (10) comportant un tambour (20) monté à rotation dans une cuve (14), **caractérisé en ce qu'**il comporte des panneaux filtrants (12) selon l'une quelconque des revendications 1 à 16 qui sont fixés sur le tambour (20).

## Patentansprüche

1. Filterplatte (12), die zum Angebrachtwerden in einem Trommelfilter (10) vorgesehen ist, wobei die Filterplatte (12) einen umlaufenden Rahmen (32) aufweist, an dem ein Filtertuch (34) befestigt ist, wobei der Rahmen (32) aus zwei Längsträgern (36, 38) ausgebildet ist, die an jedem Ende durch einen Endquerträger (40, 42) verbunden sind, **dadurch gekennzeichnet, dass** die Filterplatte (12) ein Netz (R1) von Kreuzstreben (44) aufweist, das die Innenkanten (46, 48, 50, 52) des Rahmens (32) miteinander verbindet, wobei das Netz (R1) von Kreuzstreben (44) mindestens ein erstes geschlossenes Muster (54) in der Mitte des Rahmens (32) ausbildet und mindestens vier Diagonalen (64, 66, 68, 70, 72, 74, 76, 78) aufweist, die in Bezug auf die Längsträger (36, 38) geneigt sind und sich von dem ersten geschlossenen Muster (54) bis zu einer Innenkante (46, 48, 50, 52) des Rahmens (32) erstrecken, und **dass** das Netz (R1) von Kreuzstreben (44) mindestens zwei Zwischenquerträger (96, 98, 100, 102) aufweist, die parallel zu den Endquerträgern (40, 42) sind und die jeweils auf beiden Seiten des ersten geschlossenen Musters (54) angeordnet sind.

2. Filterplatte (12) nach Anspruch 1, **dadurch gekennzeichnet, dass** sich mindestens vier Diagonalen (72, 74, 76, 78) jeweils von dem ersten geschlossenen Muster (54) bis zu einer Ecke (88, 90, 92, 94) des Rahmens (32) erstrecken.

3. Filterplatte (12) nach Anspruch 1 oder 2, **dadurch gekennzeichnet, dass** sich mindestens vier Diagonalen (64, 66, 68, 70) jeweils von dem ersten geschlossenen Muster (54) bis zu dem Ende eines Zwischenquerträgers (96, 98) erstrecken.

4. Filterplatte (12) nach einem der Ansprüche 1 bis 3,
**dadurch gekennzeichnet, dass** jeder Zwischenquerträger (96, 98, 100, 102) mindestens zwei Diagonalen (72, 74, 76, 78) kreuzt.

5. Filterplatte (12) nach einem der Ansprüche 1 bis 4,
**dadurch gekennzeichnet, dass** das Netz (R1) von Kreuzstreben (44) ein zweites geschlossenes Muster (104) ausbildet, das konzentrisch zu dem ersten geschlossenen Muster (54) ist.

6. Filterplatte (12) nach einem der Ansprüche 1 bis 5,
**dadurch gekennzeichnet, dass** das Netz (R1) von Kreuzstreben (44) schräge Kreuzstreben (110, 112, 114, 116) aufweist, die die Diagonalen (64, 66, 68, 70) kreuzen und die in Bezug auf die Längsträger (36, 38) geneigt sind.

7. Filterplatte (12) nach einem der Ansprüche 1 bis 6,
**dadurch gekennzeichnet, dass** das Netz (R1) von Kreuzstreben (44) eine Quersymmetrieebene (P2) besitzt, die das erste geschlossene Muster (54) in seiner Mitte schneidet.

8. Filterplatte (12) nach einem der Ansprüche 1 bis 7,
**dadurch gekennzeichnet, dass** das Netz (R1) von Kreuzstreben (44) zwei Querkreuzstreben (118, 120) aufweist, die sich jeweils quer von einem Längsträger (36, 38) mindestens bis zu dem ersten geschlossenen Muster (54) erstrecken.

9. Filterplatte (12) nach einem der Ansprüche 1 bis 8,
**dadurch gekennzeichnet, dass** das Netz (R1) von Kreuzstreben (44) zwei Längskreuzstreben (122, 124) aufweist, die sich jeweils in Längsrichtung von einem Endquerträger (40, 42) bis zu einem Zwischenquerträger (106, 108) erstrecken.

10. Filterplatte (12) nach einem der Ansprüche 1 bis 9,
**dadurch gekennzeichnet, dass** das erste geschlossene Muster (54) ein Polygon mit mindestens vier Seiten, vorzugsweise sechs Seiten, ist.

11. Filterplatte (12) nach Anspruch 10, **dadurch gekennzeichnet, dass** mindestens vier Diagonalen (72, 74, 76, 78) an das erste geschlossene Muster (54) an einer Ecke des Polygons angeschlossen sind.

12. Filterplatte (12) nach einem der Ansprüche 1 bis 11,
**dadurch gekennzeichnet, dass** der Querschnitt der Kreuzstreben (44), die das Netz (R1) von Kreuzstreben (44) ausbilden, ein trapezförmiges Profil vorweist, dessen Scheitelpunkt zu der Seite des Filtertuchs (34) hin ausgerichtet ist.

13. Filterplatte (12) nach Anspruch 12, **dadurch gekennzeichnet, dass** das Netz (R1) von Kreuzstreben (44) mindestens zwei Zwischenquerträger (100, 102) aufweist, deren trapezförmiges Profil eine Fläche definiert, die um mindestens 20 % größer als die Fläche ist, die durch das trapezförmige Profil der Diagonalen (72, 74, 76, 78) definiert wird.

14. Filterplatte (12) nach einem der Ansprüche 1 bis 13,
**dadurch gekennzeichnet, dass** sich das erste geschlossene Muster (54) auf jeder Seite des geschlossenen Musters (54), das sich in der Mitte des Rahmens (32) befindet, mindestens einmal wiederholt.

15. Filterplatte (12) nach einem der Ansprüche 1 bis 14,
**dadurch gekennzeichnet, dass** der Rahmen (32) und das Netz (R1) von Kreuzstreben (44) durch Formen aus Kunststoff aus einem Stück hergestellt sind.

16. Filterplatte (12) nach Anspruch 15, **dadurch gekennzeichnet, dass** das Filtertuch (34) aus Kunststoff hergestellt ist und auf einer Oberfläche (126) des Rahmens (32) einschließlich auf der entsprechenden Oberfläche des Netzes (R1) von Kreuzstreben (44) verschweißt ist.

17. Trommelfilter (10), das zum Filtern einer Flüssigkeit vorgesehen ist, wobei das Trommelfilter (10) eine Trommel (20) aufweist, die in einem Behälter (14) drehbar angebracht ist, **dadurch gekennzeichnet, dass** es Filterplatten (12) nach einem der Ansprüche 1 bis 16 aufweist, die an der Trommel (20) befestigt sind.

## Claims

1. Filter panel (12) for mounting in a drum filter (10), the filter panel (12) having a peripheral frame (32) to which a filter cloth (34) is fastened, the frame (32) being formed from two longitudinal members (36, 38) which are connected at each end by an end cross-member (40, 42), **characterized in that** the filter panel (12) has a lattice (R1) of crosspieces (44) which connects the inner edges (46, 48, 50, 52) of the frame (32) to one another, the lattice (R1) of crosspieces (44) forming at least a first closed pattern (54) in the centre of the frame (32) and having at least four diagonals (64, 66, 68, 70, 72, 74, 76, 78) which are inclined with respect to the longitudinal members (36, 38) and which extend from the first closed pattern (54) to an inner edge (46, 48, 50, 52) of the frame (32), and **in that** the lattice (R1) of crosspieces (44) has at least two intermediate cross-members (96, 98, 100, 102) which are parallel to the end cross-members (40, 42) and which are arranged respectively on either side of the first closed pattern (54).

2. Filter panel (12) as claimed in claim 1, **characterised in that** at least four diagonals (72, 74, 76, 78) each extend from the first closed pattern (54) to a corner (88, 90, 92, 94) of the frame (32).

3. Filter panel (12) according to claim 1 or 2, **characterised in that** at least four diagonals (64, 66, 68, 70) each extend from the first closed pattern (54) to the end of an intermediate cross-member (96, 98).

4. Filter panel (12) according to any one of claims 1 to 3, **characterised in that** each intermediate cross-member (96, 98, 100, 102) crosses at least two diagonals (72, 74, 76, 78).

5. Filter panel (12) according to any one of claims 1 to 4, **characterised in that** the lattice (R1) of crosspieces (44) forms a second closed pattern (104) concentric with the first closed pattern (54).

6. Filter panel (12) according to any one of claims 1 to 5, **characterised in that** the lattice (R1) of crosspieces (44) comprises oblique crosspieces (110, 112, 114, 116) which cross diagonals (64, 66, 68, 70) and which are inclined with respect to the longitudinal members (36, 38).

7. Filter panel (12) according to any one of claims 1 to 6, **characterised in that** the lattice (R1) of crosspieces (44) has a transverse plane of symmetry (P2) intersecting the first closed pattern (54) at its centre.

8. Filter panel (12) according to any one of claims 1 to 7, **characterised in that** the lattice (R1) of crosspieces (44) comprises two transverse crosspieces (118, 120) which each extend transversely from a longitudinal member (36, 38) at least to the first closed pattern (54).

9. Filter panel (12) according to any one of claims 1 to 8, **characterised in that** the lattice (R1) of crosspieces (44) comprises two longitudinal crosspieces (122, 124) which each extend longitudinally from an end cross-members (40, 42) to an intermediate cross-members (106, 108).

10. Filter panel (12) according to any one of claims 1 to 9, **characterised in that** the first closed pattern (54) is a polygon with at least four sides, preferably six sides.

11. Filter panel (12) according to claim 10, **characterised in that** at least four diagonals (72, 74, 76, 78) are connected to the first closed pattern (54) at a corner of the polygon.

12. Filter panel (12) according to any one of claims 1 to 11, **characterised in that** the cross-section of the crosspieces (44) forming the lattice (R1) of crosspieces (44) has a trapezoidal profile, the apex of which is oriented on the side of the filter cloth (34).

13. Filter panel (12) according to claim 12, **characterised in that** the lattice (R1) of crosspieces (44) comprises at least two intermediate crosspieces (100, 102) whose trapezoidal profile defines an area at least 20% greater than the area defined by the trapezoidal profile of the diagonals (72, 74, 76, 78).

14. Filter panel (12) according to any one of claims 1 to 13, **characterised in that** the first closed pattern (54) repeats at least once on each side of the closed pattern (54) located in the centre of the frame (32).

15. Filter panel (12) according to any one of claims 1 to 14, **characterised in that** the frame (32) and the lattice (R1) of crosspieces (44) are made in one piece by moulding from plastic.

16. Filter panel (12) according to claim 15, **characterised in that** the filter cloth (34) is made of plastic and welded to one side (126) of the frame (32) including the corresponding side of the lattice (R1) of crosspieces (44).

17. A drum filter (10) for filtering a liquid, the drum filter (10) comprising a drum (20) rotatably mounted in a vessel (14), **characterised in that** it comprises filter panels (12) according to any one of claims 1 to 16 which are attached to the drum (20).
